# FASCICULE DE BREVET EUROPEEN

(11) **EP 3 233 586 B1**
(45) Date de publication et mention de la délivrance du brevet: **20.03.2019**
(21) Numéro de dépôt: 15797938.6
(22) Date de dépôt: 13.11.2015
(51) Int. Cl.: B60R 25/021, H01H 27/06

(54) **ANTIVOL DE COLONNE DE DIRECTION**
DIEBSTAHLSICHERUNG FÜR EINE LENKSÄULE
STEERING COLUMN LOCK

(30) Priorité: 18.12.2014 EP 14307092
(43) Date de publication de la demande: 25.10.2017
(73) Titulaire: U-Shin France, 94000 Créteil (FR)
(72) Inventeur: JULIEN, Renaud, F-94046 Creteil Cedex (FR)
(74) Mandataire: Gaillarde, Frédéric F. Ch.
(86) Numéro de dépôt international: PCT/EP2015/076628
(87) Numéro de publication internationale: WO 2016/096273

(56) Documents cités:
- WO-A1-2014/091945
- US-A- 6 040 535
- US-A- 6 069 332

## Description

La présente se rapporte au domaine des antivols de colonne de direction, notamment pour véhicule automobile.

Comme cela est divulgué dans le document US6040535, ce type d'antivol de véhicule comprend généralement un corps d'antivol avec un logement pour interrupteur. Le logement est configuré pour recevoir un corps d'un interrupteur permettant d'alimenter en courant un démarreur du véhicule associé à l'antivol. Plus particulièrement, le corps d'interrupteur peut comprendre une platine, un rotor et un couvercle destinés à être logés dans le logement d'interrupteur.

Afin d'obtenir un bon fonctionnent électrique, il existe un antivol comprenant un interrupteur monté en force axialement entre deux demi corps d'antivol. Ces derniers logent au moins une partie de l'interrupteur, de sorte qu'après l'assemblage de l'antivol de colonne de direction, l'interrupteur est maintenu solidement dans le logement.

En outre, le fonctionnement électrique de l'interrupteur doit être assuré par un bon centrage dudit l'interrupteur dans le corps d'antivol selon un axe longitudinal. A cet effet, le corps d'interrupteur peut comprendre des godrons de centrage sur la platine et sur le couvercle coopérant avec une structure de centrage adaptée dans le logement pour centrer l'interrupteur.

Une telle configuration présente l'inconvénient qu'en cas de nécessité de remplacer un interrupteur défaillant, il est nécessaire de changer complètement l'antivol.

Un autre inconvénient est la nécessité de prévoir plusieurs pièces de centrage pour assurer le bon fonctionnement électrique.

Le but de l'invention est de proposer un procédé de montage d'un corps d'interrupteur dans un corps d'antivol de colonne de direction qui soit simple à fabriquer, efficace, dont l'interrupteur peut être dissocié facilement du reste de l'antivol et présentant un bon fonctionnement électrique.

A cet effet, la présente invention propose un procédé de montage d'un corps d'interrupteur dans un corps d'antivol de colonne de direction, le corps d'antivol comprenant un logement configuré pour recevoir le corps d'interrupteur,
dans lequel le corps d'interrupteur comprend au moins un premier moyen d'attache, et
dans lequel le corps d'antivol comprend au moins un deuxième moyen d'attache disposé au niveau du logement,
le procédé comprenant des étapes pour
- insérer le corps d'interrupteur dans le logement du corps d'antivol suivant un axe longitudinal de logement,
- déplacer le corps d'interrupteur dans le logement de sorte que les premier et deuxième moyens d'attache coopèrent ensemble par clipsage pour fixer l'interrupteur au corps d'antivol.

Suivant des modes de réalisation préférés, le procédé de montage selon l'invention comprend une ou plusieurs des caractéristiques suivantes, prises séparément ou en combinaison :
- le corps d'interrupteur comprend au moins un premier moyen de montage en baïonnette,
   le corps d'antivol comprend au moins un deuxième moyen de montage en baïonnette disposé au niveau du logement,
- le corps d'interrupteur et le corps d'antivol comprennent chacun au moins deux moyens de montage en baïonnette ; et/ou
- le corps d'interrupteur comprend
   une platine, configurée pour être insérée dans le logement,
   un rotor et un couvercle configurés pour être montés sur la platine et insérés avec la platine dans le logement,
   dans lequel le rotor est logé dans la platine, et
   dans lequel le couvercle est au moins partiellement logé dans la platine ; et/ou
- le couvercle est entièrement logé dans la platine; et/ou
- l'antivol comprend une ouverture de déclipsage au niveau du renfoncement permettant d'accéder au et de déclipser le premier et/ou le deuxième moyen d'attache.

La présente invention propose en outre un procédé de montage d'un corps d'interrupteur dans un corps d'antivol de colonne de direction, le corps d'antivol comprenant un logement configuré pour recevoir le corps d'interrupteur,
dans lequel le corps d'interrupteur comprend au moins un premier moyen d'attache, et dans lequel le corps d'antivol comprend au moins un deuxième moyen d'attache disposé au niveau du logement,
le procédé comprenant des étapes pour
- insérer le corps d'interrupteur dans le logement du corps d'antivol suivant un axe longitudinal de logement,
- déplacer le corps d'interrupteur dans le logement de sorte que les premier et deuxième moyens d'attache coopèrent ensemble par clipsage pour fixer l'interrupteur au corps d'antivol.

Suivant des modes de réalisation préférés, le procédé de montage selon l'invention comprend une ou plusieurs des caractéristiques suivantes, prises séparément ou en combinaison :
- le corps d'interrupteur comprend au moins un premier moyen de montage en baïonnette,
   le corps d'antivol comprend au moins un deuxième moyen de montage en baïonnette disposé au niveau du logement,
   et lors du déplacement du corps d'interrupteur, les premier et deuxième moyens de montage en baïonnette coopèrent ensemble de sorte à empêcher un déplacement du corps d'interrupteur hors du logement suivant l'axe longitudinal de logement ; et/ou
- l'étape pour déplacer comprend faire pivoter le corps d'interrupteur dans le logement autour de l'axe longitudinal d'interrupteur.

La présente invention propose en outre un procédé de démontage d'un corps d'interrupteur monté dans un logement d'un corps d'antivol de colonne de direction,
dans lequel le corps d'interrupteur comprend au moins un premier moyen d'attache, et dans lequel le corps d'antivol comprend au moins un deuxième moyen d'attache disposé au niveau du logement,
les premier et deuxième moyens d'attache coopérant ensemble par clipsage pour fixer l'interrupteur au corps d'antivol,
le procédé comprenant des étapes pour
- déclipser les premier et deuxième moyens d'attache,
- déplacer le corps d'interrupteur dans le logement de sorte à dissocier les premier et deuxième moyens d'attache,
- retirer le corps d'interrupteur du logement suivant un axe longitudinal de logement.

Suivant des modes de réalisation préférés, le procédé de démontage selon l'invention comprend une ou plusieurs des caractéristiques suivantes, prises séparément ou en combinaison :
- le corps d'interrupteur comprend au moins un premier moyen de montage en baïonnette,
   le corps d'antivol comprend au moins un deuxième moyen de montage en baïonnette disposé au niveau du logement,
   les premier et deuxième moyens de montage en baïonnette coopérant ensemble de sorte à empêcher un déplacement du corps d'interrupteur hors du logement suivant l'axe longitudinal de logement,
   et lors du déplacement du corps d'interrupteur, les premier et deuxième moyens de montage en baïonnette sont également dissociés l'un de l'autre ; et/ou
- l'étape pour déplacer comprend faire pivoter le corps d'interrupteur dans le logement autour de l'axe longitudinal d'interrupteur.

D'autres caractéristiques et avantages de l'invention apparaîtront à la lecture de la description suivante d'un mode de réalisation préféré de l'invention, donné à titre d'exemple non limitatif et en référence aux dessins annexés sur lesquels :
- la figure 1 est une vue éclatée dans l'espace de l'interrupteur;
- la figure 2 représente l'interrupteur de la figure 1 monté ;
- les figures 3 à 5A représentent l'interrupteur de la figure 2 en cours de montage dans un corps d'antivol de colonne de direction ;
- la figure 5B représente un corps d'interrupteur et un corps d'antivol en vue en coupe selon VV de la figure 5A ;
- la figure 6 est une vue dans l'espace d'un antivol de colonne de direction.

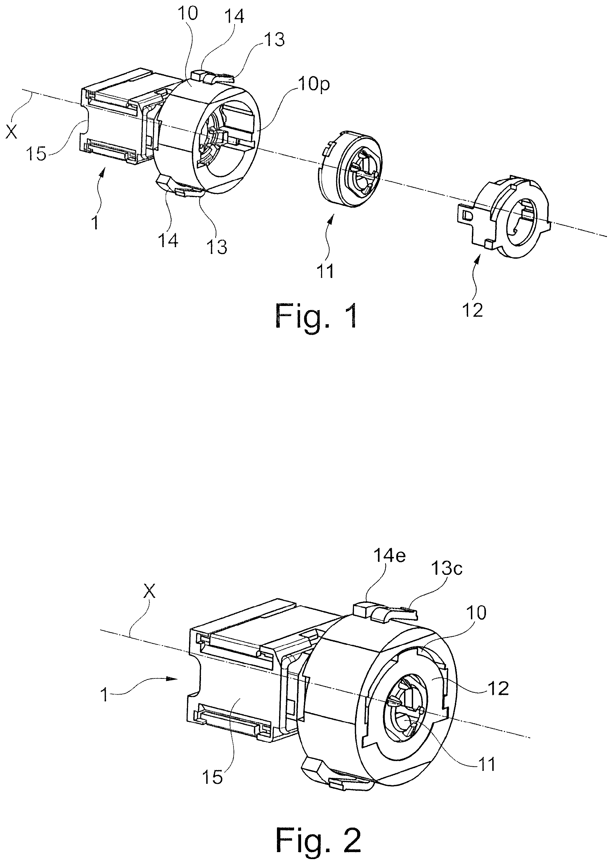

En se référant aux figures 1 et 2 l'interrupteur 1 comprend un connecteur 15 et un corps d'interrupteur 10 configuré pour être inséré dans un corps d'antivol 2. A cet effet, le corps d'antivol 2 comprend un logement 20 configuré pour recevoir le corps d'interrupteur 10. Le corps d'interrupteur 10 a une forme sensiblement cylindrique.

Le corps d'interrupteur 10 comprend une platine 10p, un rotor 11 et un couvercle 12. La platine 10p, le rotor 11 et le couvercle 12 sont configurés pour être montés ensemble pour former le corps d'interrupteur 10. Une fois monté, le rotor 11 est disposé entre la platine 10p et le couvercle 12.

Plus particulièrement, la platine 10p de l'interrupteur comprend un logement de forme sensiblement cylindrique configuré pour recevoir le rotor 11 et le couvercle 12.

Le couvercle 12 de l'interrupteur comprend au moins un moyen d'attache tel qu'un clip configuré pour fixer le couvercle 12 et le rotor 11 dans le logement de la platine 10p.

On entend ici par « clip », un élément élastique apte à être comprimé par une paroi lors d'un déplacement et d'être libéré pour reprendre sa forme initiale lorsque ledit élément arrive dans une cavité prévue pour le recevoir, ledit élément pouvant être sorti de la cavité en compriment ledit élément et en réalisant le déplacement en sens inverse.

Ledit au moins un clip coopère avec une structure interne disposée dans le logement de la platine 10p. Le couvercle 12 est ainsi logé, de préférence totalement, dans le logement de la platine 10p. En outre, une fois monté, le rotor 11 est totalement logé dans la platine 10p.

Avantageusement, le centrage de la platine 10p, du rotor 11 et du couvercle 12 est simplifié et réalisé à moindre coût car il n'est pas nécessaire de prévoir des pièces externes à l'interrupteur disposées entre le corps d'interrupteur 10 et le logement 20 pour centrer la platine 10p, le rotor 11 et le couvercle 12.

En outre, la forme externe du corps d'interrupteur 10 est simplifiée de même que son montage dans le logement 20. En particulier, il est plus facile de réaliser un logement 20 correspondant à la platine sans prévoir de variations supplémentaires du logement 20 correspondant à la forme de l'ensemble rotor 11 couvercle 12.

Le corps d'interrupteur 10 comprend sur sa face externe un moyen d'attache 13, ici deux moyens d'attache, en particulier des clips 13c formant chacun un doigt s'étendant perpendiculairement à un axe longitudinal d'interrupteur X. Le clip 13c comprend une origine et une extrémité de retenue. L'origine du clip 13c forme une projection radiale sur le pourtour du corps d'antivol 2, et le reste du clip 13c suit le pourtour du corps d'antivol jusqu'à l'extrémité de retenue. Le clip 13c permet une fixation du corps d'interrupteur par clipsage suivant un mouvement perpendiculaire à l'axe d'interrupteur X, en particulier suivant une rotation autour de l'axe d'interrupteur X.

Le corps d'interrupteur 10 comprend en outre sur sa face externe deux moyens de montage en baïonnette 14, en particulier des ergots 14e. L'ergot 14e s'étend perpendiculairement à l'axe d'interrupteur X. L'ergot 14e forme une large projection radiale sur le pourtour du corps d'antivol 2.

En particulier, le clip 13c est juxtaposé à l'ergot 14e sur le corps d'interrupteur 10. Le clip 13c et l'ergot 14e sont alignés suivant l'axe d'interrupteur X. Le clip 13c est disposé du côté du corps d'interrupteur 10 et l'ergot 14e est disposé du côté du connecteur 15. Le clip 13c et l'ergot 14e ont sensiblement la même taille.

Le connecteur 15 a une forme parallélépipédique et s'étend longitudinalement suivant l'axe d'interrupteur X. Le connecteur 15 a une taille inférieure au diamètre du corps d'interrupteur 10. Ainsi le connecteur 15 permet d'avoir un encombrement réduit au niveau du connecteur 15 de l'interrupteur 1 par rapport à l'art antérieur.

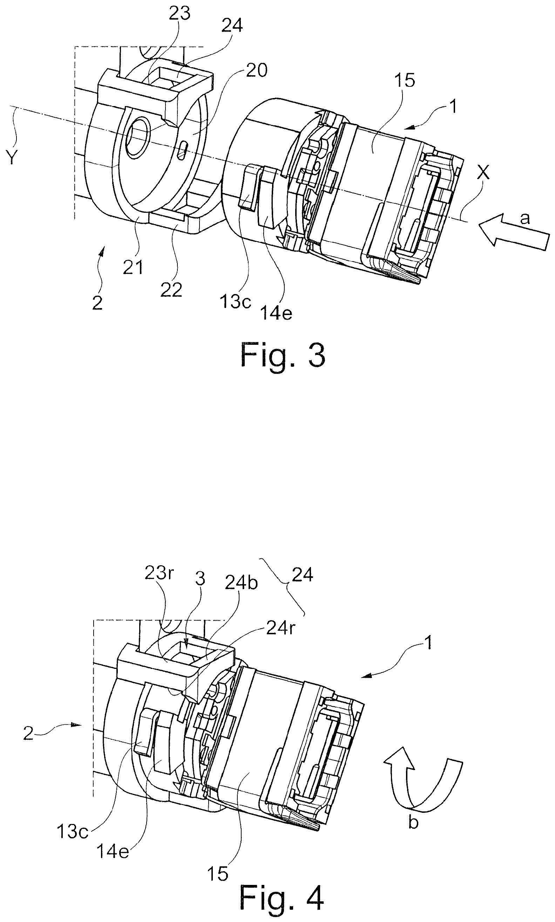

En se référant aux figures 3 à 6, le corps d'antivol 2 comprend deux demi corps, dits corps principal et secondaire, configurés pour être associés ensemble pour former le corps d'antivol 2. Chaque demi corps comprend une partie du logement 20 recevant le corps d'interrupteur 10. Le logement 20 a une forme longitudinale suivant un axe longitudinal de logement Y. Le logement 20 a une forme configurée pour recevoir le corps d'interrupteur 10 lorsqu'il est inséré suivant l'axe de logement Y qui se confond alors avec l'axe d'interrupteur X.

Plus particulièrement, le logement 20 comprend au moins une ouverture d'insertion 21 recevant chaque ergot 14e et chaque clip 13c lors de l'insertion du corps d'interrupteur 10 dans le logement 20.

Le logement 20 comprend deux parois latérales 22 qui s'étendent longitudinalement suivant un axe parallèle à l'axe de logement Y. Chaque paroi latérale est prévue sur un demi corps. La paroi latérale 22 comprend un moyen d'attache 23, en particulier une surface de retenue 23r configurée pour retenir le clip 13c une fois reçu dans le logement 20. La surface de retenue 23r s'étend longitudinalement suivant un axe parallèle à l'axe de logement Y.

La surface de retenue 23r coopère avec le clip 13c pour fixer le corps d'interrupteur 10 dans le logement 20 suivant une rotation autour de l'axe de logement Y.

La paroi latérale 22 comprend en outre un moyen de montage en baïonnette 24 qui comprend un renfoncement 24r et une butée 24b. Le renfoncement 24r permet de recevoir à la fois l'ergot 14e et le clip 13c dans la paroi 22. La butée 24b s'étend longitudinalement suivant un axe perpendiculaire à l'axe de logement Y.

Le clip 13c est élastique et est chanfreiné au niveau de son origine. Le clip 13c est ensuite recourbé sur le pourtour du corps d'antivol. L'extrémité de retenue du clip 13c s'étend radialement au-delà de la surface de retenue 23r.

La butée 24b coopère avec l'ergot 14e de sorte à empêcher le retrait du corps d'interrupteur 10 du logement 20 suivant l'axe de logement Y.

Avantageusement la configuration de l'antivol selon l'invention permet une fixation facilitée de l'interrupteur 1 par le clip 13c tout en maintenant une résistance significative au retrait de l'interrupteur 1 par l'ergot 14e et la butée 24b.

La paroi latérale 22 comprend en outre une ouverture de déclipsage 3 permettant un accès par un utilisateur au clip 13c de sorte à déclipser le clip, à savoir agir sur ledit clip en comprimant ce dernier pour le faire sortir du logement.

Avantageusement, l'ouverture de déclipsage 3 permet de démonter l'interrupteur 1 de l'antivol 2 sans avoir besoin de démonter le corps d'antivol 2.

En se référant aux figures 3 à 5B, le montage de l'interrupteur 1 dans le corps d'antivol 2 comprend une étape (a) pour insérer le corps d'interrupteur 10 dans le logement 20 du corps d'antivol 2. L'insertion se fait suivant l'axe de logement Y qui devient confondu avec l'axe d'interrupteur X. Suite à l'insertion, le clip 13c et l'ergot 14e sont disposés dans l'ouverture d'insertion 21.

Le montage comprend en outre une étape (b) pour déplacer le corps d'interrupteur 10 dans le logement 20 par un pivotement autour des axes X et Y. Lors de cette étape, la partie chanfreinée du clip 13c est insérée dans le renfoncement 24r et l'extrémité de retenue du clip 13c est repliée à l'intérieur du renfoncement 24r de la paroi latérale 21 jusqu'au niveau de la surface de retenue 23r. En raison de l'élasticité du clip 13c, l'extrémité de retenue se re-étend de sorte à coopérer avec la surface de retenue 23r et ainsi fixer le corps d'interrupteur 10 au corps d'antivol 2.

En outre, lors de l'étape (b) pour déplacer (10), l'ergot 14e est inséré dans le renfoncement 24r de sorte à être disposé au niveau de la butée 24b.

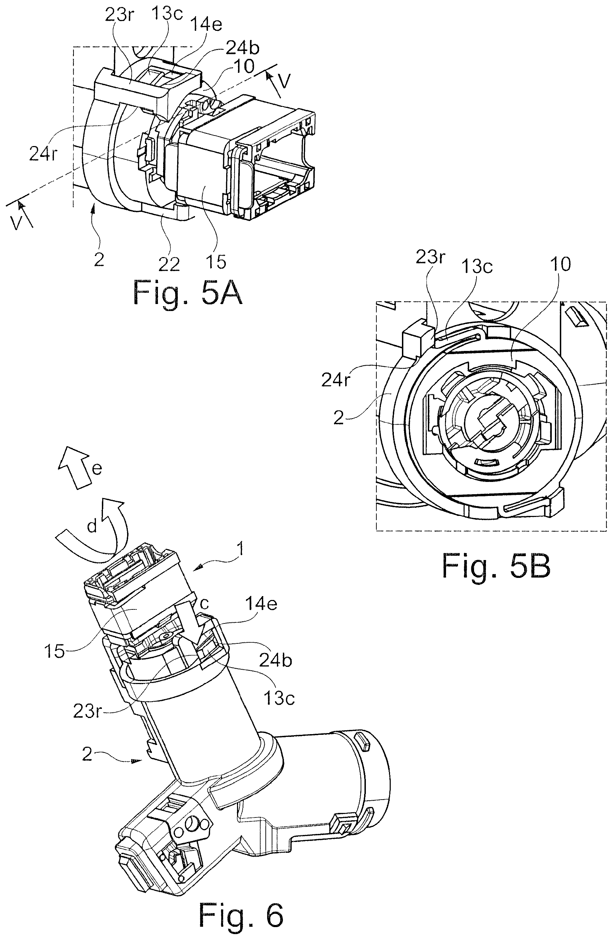

En se référant à la figure 6, le démontage de l'interrupteur 1 hors du corps d'antivol comprend une étape (c) pour déclipser le clip 13c au moyen de l'ouverture de déclipsage 3, en particulier en enfonçant l'extrémité de retenue du clip 13c pour la dissocier de la surface

En outre, le démontage comprend une étape (d) pour déplacer le corps d'interrupteur 10 dans le logement 20 par un pivotement autour des axes X et Y de sorte à dissocier complètement le clip 13c de la surface de retenue 23r ainsi que l'ergot 14 de la butée 24b, et faire sortir le clip 13c et l'ergot 14e de la paroi 21.

Le démontage comprend en outre une étape (e) pour retirer le corps d'interrupteur 10 du logement 20 suivant l'axe de logement Y.

## Revendications

1. Procédé de montage d'un corps d'interrupteur (10) dans un corps d'antivol (2) de colonne de direction, le corps d'antivol (2) comprenant un logement (20) configuré pour recevoir le corps d'interrupteur (10), dans lequel le corps d'interrupteur (10) comprend au moins un premier moyen d'attache (13) et au moins un premier moyen de montage en baïonnette (14), et dans lequel le corps d'antivol (2) comprend au moins un deuxième moyen d'attache (23) et au moins un deuxième moyen de montage en baïonnette (24) disposés au niveau du logement, le procédé comprenant des étapes pour :
- insérer le corps d'interrupteur (10) dans le logement (20) du corps d'antivol (2) suivant un axe longitudinal de logement (X),
- déplacer le corps d'interrupteur (10) dans le logement (20) de sorte que les premier (13) et deuxième (23) moyens d'attache coopèrent ensemble par clipsage pour fixer l'interrupteur au corps d'antivol, et les premier (14) et deuxième (24) moyens de montage en baïonnette coopèrent ensemble de sorte à empêcher un déplacement du corps d'interrupteur (10) hors du logement (20) suivant l'axe longitudinal de logement (Y), et
l'étape pour déplacer comprend faire pivoter le corps d'interrupteur (10) dans le logement (20) autour de l'axe longitudinal d'interrupteur (Y).

2. Procédé de démontage d'un corps d'interrupteur (10) monté dans un logement (20) d'un corps d'antivol (2) de colonne de direction, dans lequel le corps d'interrupteur (10) comprend au moins un premier moyen d'attache (13) et au moins un premier moyen de montage en baïonnette (14), et dans lequel le corps d'antivol (2) comprend au moins un deuxième moyen d'attache (23) et au moins un deuxième moyen de montage en baïonnette (24) disposés au niveau du logement (20), les premier (13) et deuxième (23) moyens d'attache coopérant ensemble par clipsage pour fixer l'interrupteur au corps d'antivol (2), le procédé comprenant des étapes pour :
- déclipser les premier (13) et deuxième (23) moyens d'attache,
- déplacer le corps d'interrupteur (10) dans le logement (20) de sorte à dissocier les premier (13) et deuxième (23) moyens d'attache,
- retirer le corps d'interrupteur (10) du logement (20) suivant un axe longitudinal de logement (Y),
les premier (14) et deuxième (24) moyens de montage en baïonnette coopérant ensemble de sorte à empêcher un déplacement du corps d'interrupteur (10) hors du logement suivant l'axe longitudinal de logement (Y),
et lors du déplacement du corps d'interrupteur (10), les premier (14) et deuxième (24) moyens de montage en baïonnette sont également dissociés l'un de l'autre, et
l'étape pour déplacer comprend faire pivoter le corps d'interrupteur (10) dans le logement (20) autour de l'axe longitudinal d'interrupteur (Y).

## Patentansprüche

1. Verfahren zum Montieren eines Schalterkörpers (10) in einem Sicherheitsschlosskörper (2) einer Lenksäule, wobei der Sicherheitsschlosskörper (2) eine Aufnahme (20) umfasst, die konfiguriert ist, um den Schalterkörper (10) aufzunehmen, wobei der Schalterkörper (10) mindestens ein erstes Befestigungsmittel (13) und mindestens ein erstes Bajonett-Montagemittel (14) umfasst, und wobei der Sicherheitsschlosskörper (2) mindestens ein zweites Befestigungsmittel (23) und mindestens ein zweites Bajonett-Montagemittel (24) umfasst, die im Bereich der Aufnahme angeordnet sind, wobei das Verfahren Schritte umfasst, zum:
- Einführen des Schalterkörpers (10) in die Aufnahme (20) des Sicherheitsschlosskörpers (2) entlang einer Aufnahme-Längsachse (X),
- Verschieben des Schalterkörpers (10) in der Aufnahme (20) sodass das erste (13) und zweite (23) Befestigungsmittel gemeinsam durch eine Clipverbindung zusammenwirken, um den Schalter am Sicherheitsschlosskörper zu fixieren, und das erste (14) und zweite (24) Bajonett-Montagemittel gemeinsam zusammenwirken, um ein Verschieben des Schalterkörpers (10) aus der Aufnahme (20) heraus entlang der Aufnahme-Längsachse (Y) zu verhindern, und
der Schritt zum Verschieben das Schwenken lassen des Schalterkörpers (10) in der Aufnahme (20) um die Schalter-Längsachse (Y) umfasst.

2. Verfahren zum Demontieren eines Schalterkörpers (10), der in einer Aufnahme (20) eines Sicherheitsschlosskörpers (2) einer Lenksäule montiert ist, wobei der Schalterkörper (10) mindestens ein erstes Befestigungsmittel (13) und mindestens ein erstes Bajonett-Montagemittel (14) umfasst, und wobei der Sicherheitsschlosskörper (2) mindestens ein zweites Befestigungsmittel (23) und mindestens ein zweites Bajonett-Montagemittel (24) umfasst, wobei die im Bereich der Aufnahme (20) angeordnet sind, das erste (13) und zweite (23) Befestigungsmittel gemeinsam durch eine Clipverbindung zusammenwirken, um den Schalter am Sicherheitsschlosskörper (2) zu fixieren, wobei das Verfahren Schritte umfasst, zum:
- Abclipen des ersten (13) und zweiten (23) Befestigungsmittels,
- Verschieben des Schalterkörpers (10) in der Aufnahme (20) um das erste (13) und zweite (23) Befestigungsmittel zu trennen,
- Entfernen des Schalterkörpers (10) aus der Aufnahme (20) entlang einer Aufnahme-Längsachse (Y) aus der Aufnahme,
wobei das erste (14) und zweite (24) Bajonett-Montagemittel gemeinsam zusammenwirken, um ein Verschieben des Schalterkörpers (10) aus der Aufnahme heraus entlang der Aufnahme-Längsachse (Y) zu verhindern,
und beim Verschieben des Schalterkörpers (10) das erste (14) und zweite (24) Bajonett-Montagemittel auch voneinander getrennt werden, und
der Schritt zum Verschieben das Schwenken lassen des Schalterkörpers (10) in der Aufnahme (20) um die Schalter-Längsachse (Y) umfasst.

## Claims

1. A method for mounting a switch body (10) in a steering column anti-theft body (2), the anti-theft body (2) comprising a housing (20) configured to receive the switch body (10), wherein the switch body (10) comprises at least a first attachment means (13) and at least a first bayonet mounting means (14), and wherein the anti-theft body (2) comprises at least a second attachment means (23) and at least a second bayonet mounting means (24) disposed at the housing, the method comprising steps for:
- inserting the switch body (10) into the housing (20) of the anti-theft body (2) along a housing longitudinal axis (X),
- displacing the switch body (10) into the housing (20) such that the first (13) and second (23) attachment means cooperate together by clipping in order to fasten the switch to the anti-theft body, and the first (14) and second (24) bayonet mounting means cooperate together so as to prevent a displacement of the switch body (10) out of the housing (20) along the housing longitudinal axis (Y), and
the displacement step comprises pivoting the switch body (10) in the housing (20) about the switch longitudinal axis (Y).

2. A method for disassembling a switch body (10) mounted in a housing (20) of a steering column anti-theft body (2), wherein the switch body (10) comprises at least a first attachment means (13) and at least a first bayonet mounting means (14), and wherein the anti-theft body (2) comprises at least a second attachment means (23) and at least a second bayonet mounting means (24) disposed at the housing, the first (13) and second (23) attachment means cooperating together by clipping in order to fasten the switch to the anti-theft body (2), the method comprising steps for:
- unclipping the first (13) and second (23) attachment means,
- displacing the switch body (10) into the housing (20) so as to dissociate the first (13) and second (23) attachment means,
- removing the switch body (10) from the housing (20) along a housing longitudinal axis (Y)
the first (14) and second (24) bayonet mounting means cooperating together so as to prevent a displacement of the switch body (10) out of the housing along the housing longitudinal axis (Y),
and upon displacement of the switch body (10), the first (14) and second (24) bayonet mounting means are also dissociated from one another, and
the displacement step comprises pivoting the switch body (10) in the housing (20) about the switch longitudinal axis (Y).
